# EUROPEAN PATENT APPLICATION

(11) **EP 4 404 643 A1**
(43) Date of publication of application: **24.07.2024**
(21) Application number: 23789473.8
(22) Date of filing: 18.08.2023
(51) Int. Cl.: H04W 52/36, H04W 52/26, H04W 28/10, H04B 1/3827

(54) **ELECTRONIC DEVICE FOR PERFORMING TIME AVERAGE SAR MODE AND METHOD FOR OPERATING ELECTRONIC DEVICE**

(30) Priority: 22.11.2022 KR 20220157397; 03.01.2023 KR 20230000521
(71) Applicant: Samsung Electronics Co., Ltd., Suwon-Si, Gyeonggi-do 16677 (KR)
(72) Inventor: LEE, Youngkow, Suwon-si, Gyeonggi-do 16677 (KR); CHOI, Junsu, Suwon-si, Gyeonggi-do 16677 (KR); KWAK, Kyuhyuck, Suwon-si, Gyeonggi-do 16677 (KR)
(74) Representative: HGF
(86) International application number: PCT/KR2023/012276
(87) International publication number: WO 2024/111794

(57) **Abstract**

Disclosed herein are an electronic device and a method of operating the electronic device, according to various embodiments. The electronic device includes: a communication circuit configured to transmit and/or receive a plurality of packets to an external electronic device; and a processor, wherein the processor may determine whether to operate in a time average specific absorption rate (TAS) mode of the communication circuit upon detecting that an external object is in contact with or in proximity to the electronic device, and increase a latency between at least some packets of the plurality of packets based on a value associated with quality of a signal transmitted by the external electronic device satisfying a specified condition while the communication circuit is operating in the TAS mode, and wherein the processor may be configured to control the communication circuit to increase a strength of a signal that includes a plurality of packets having the increased latency. Various other embodiments are possible.

## Description

### [Technical Field]

Various embodiments of the present disclosure relate to an electronic device and a method of operating the electronic device, in particular to an electronic device performing a time average SAR mode.

### [Background Art]

With the proliferation of various electronic devices, speed improvements have been realized for wireless communications that various electronic devices are capable of utilizing. Of the wireless communications supported by recent electronic devices, IEEE 802.11 WLAN (or Wi-Fi) is a standard for enabling high-speed wireless connectivity across a variety of electronic devices. While the first implementations of Wi-Fi could support transmission rates of up to 1 to 9 Mbps, the Wi-Fi 6 technology (or IEEE 802.11 ax) is capable of supporting transmission rates of up to about 10 Gbps.

The electronic device may support various services using relatively large amounts of data (e.g., UHD quality video streaming services, augmented reality (AR) services, virtual reality (VR) services, or mixed reality (MR) services) using wireless communications that support high transmission rates, and support a variety of other services.

### [Disclosure of Invention]

### [Technical Problem]

An electronic device may create a channel for exchanging data with an external electronic device (or an access point (AP)), and transmit or receive data over the created channel.

The electronic device may increase a data transmission success rate by monitoring a state of the created channel and, in case that the state of the channel is relatively poor, increasing a strength of a signal to be transmitted to an external electronic device.

However, the strength of the signal to be transmitted to the external electronic device may be limited by various conditions. According to an example, in case that an external object (e.g., a part of a user's body) is in contact and/or adjacent to the electronic device, the electronic device may configure the strength of the signal to be a specified magnitude or less to satisfy a specific absorption rate (SAR) condition.

The electronic device may satisfy the SAR condition through a time average SAR (TAS) mode in a manner that configures a magnitude of an average power of a signal over a specified period of time to be a specified magnitude or less. However, the electronic device may decrease a magnitude of a peak power of the signal in order to decrease the magnitude of the average power of the signal to the specified magnitude or less in case that an amount of data to be transmitted to the external electronic device increases. The decrease in the magnitude of the peak power of the signal may decrease the success rate of data transmission.

### [Solution to Problem]

An electronic device according to an embodiment may include a communication circuit configured to transmit and/or receive a plurality of packets to an external electronic device. The electronic device may include a processor. The processor may determine whether to operate a time average specific absorption rate (TAS) mode of the communication circuit when the processor detects that an external object is in contact or in proximity to the electronic device. The processor may increase a latency between at least some packets of the plurality of packets based on a value associated with quality of a signal transmitted by the external electronic device satisfying a specified condition while the communication circuit is operating in the TAS mode. The processor may be configured to control the communication circuit to increase a strength of a signal that includes the plurality of packets having the increased latency.

A method of operating the electronic device according to an embodiment may include determining whether to operate a time average specific absorption rate (TAS) mode of the communication circuit when the processor detects that an external object is in contact or in proximity to the electronic device. The method of operating the electronic device may include increasing a latency between at least some packets of the plurality of packets based on a value associated with quality of a signal transmitted by the external electronic device satisfying a specified condition while the communication circuit is operating in the TAS mode. The method of operating the electronic device may include increasing the strength of the signal to include the plurality of packets with the increased latency.

An electronic device according to an embodiment may include a communication circuit configured to transmit and/or receive a plurality of packets to an external electronic device. The electronic device may include a processor. The processor may determine whether to operate a time average specific absorption rate (TAS) mode of the communication circuit when the processor detects that an external object is in contact or in proximity to the electronic device. The processor may control the communication circuit such that at least some packets of the plurality of packets have a first interval while the communication circuit is operating in the TAS mode. The processor may control the communication circuit to transmit a signal including the at least some packets. The processor may control the communication circuit such that some other packets of the plurality of packets have a second interval greater than the first interval, based on a value associated with quality of a signal transmitted by the external electronic device satisfying a specified condition. The processor may control the communication circuit to increase a strength of a signal that includes the some other packets.

### [Advantageous Effects of invention]

The electronic device and the method of operation of the electronic device according to an embodiment may, while operating in TAS mode, increase the latency between the plurality of packets to be transmitted to the external electronic device in case that a value associated with the quality of the signal transmitted by the external electronic device satisfies a specified condition. A magnitude of some of the signal may decrease during the latency. Therefore, the electronic device may increase the peak power of the signal and the data transmission success rate while maintaining the average power of the signal equal to or less than a specified value.

The electronic device and the method of operating the electronic device according to an embodiment may increase the latency of the packets that do not have the specified service type without increasing the latency of the packets than have the specified service type among the plurality of packets. A magnitude of some of the signal may decrease during the latency. Therefore, the electronic device may increase the peak power of the signal while maintaining the average power of the signal equal to or less than a specified value, and may not decrease a transmission rate of packets having a service type that requires low latency while increasing the data transmission success rate.

### [Brief Description of Drawings]

FIG. 1 is a block diagram illustrating an electronic device according to an embodiment.
FIG. 2 is a block diagram illustrating the electronic device for supporting legacy network communication and 5G network communication according to embodiments.
FIG. 3A is a view illustrating an embodiment in which the electronic device is connected through short-range wireless communication to an external electronic device, according to various embodiments of the present disclosure.
FIG. 3B is a view illustrating an embodiment in which the electronic device, according to an embodiment, adjusts a strength of a signal to satisfy a specific absorption rate (SAR).
FIG. 4 is a block diagram illustrating the electronic device according to an embodiment.
FIG. 5 is a view illustrating an embodiment in which the electronic device, according to an embodiment, increases a latency between a plurality of packets.
FIG. 6 is a view illustrating an embodiment in which the electronic device, according to an embodiment, determines the latency between the plurality of packets.
FIG. 7 is a view illustrating an embodiment in which the electronic device, according to an embodiment, determines whether the latency increases based on a service type of the plurality of packets.
FIG. 8 is an operational flowchart illustrating a method of operating the electronic device according to an embodiment.

### [Mode for the Invention]

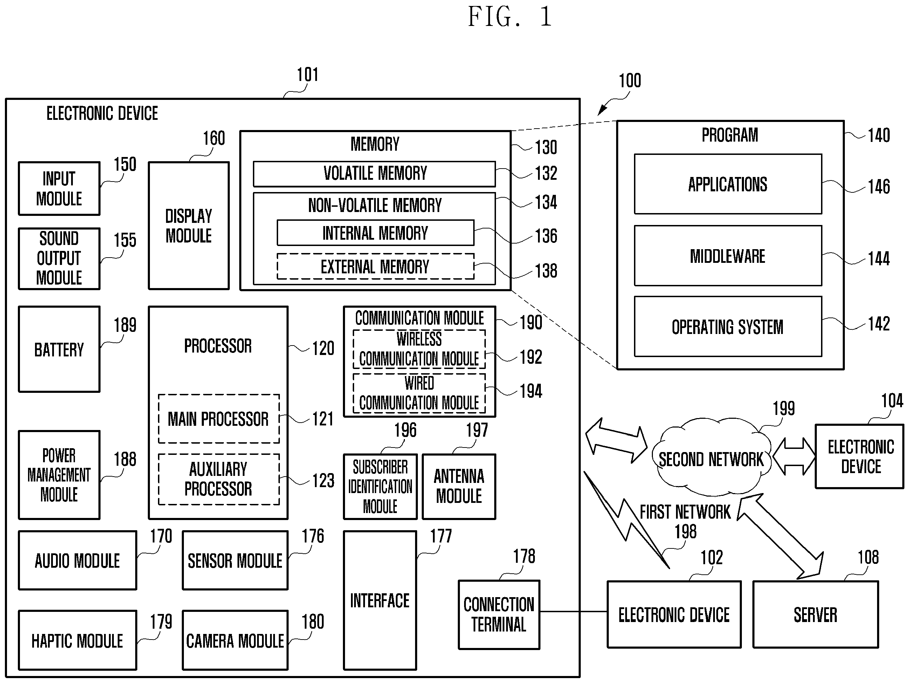

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

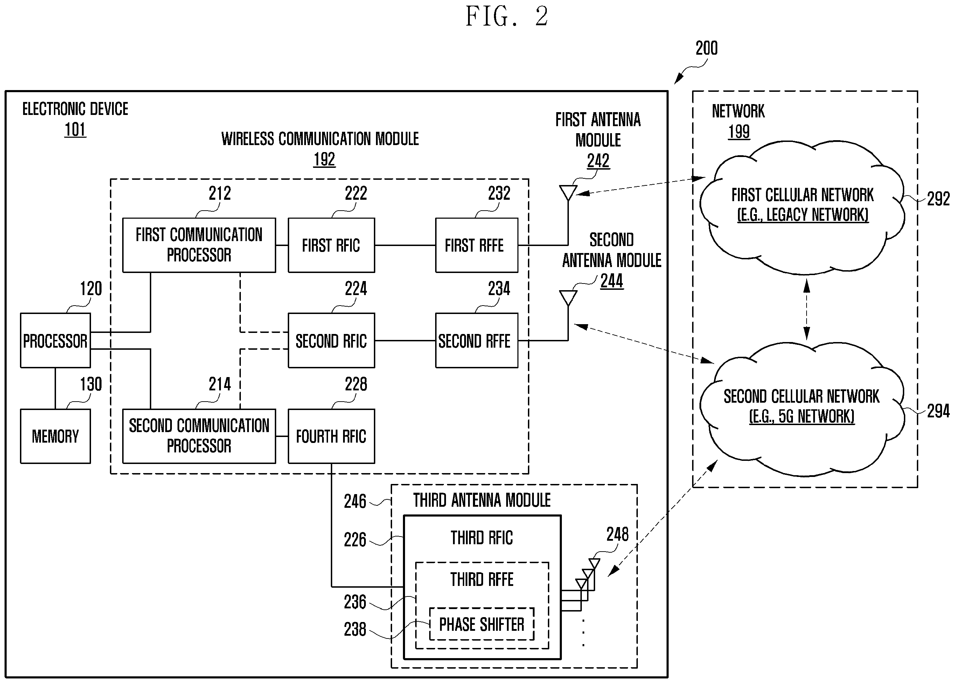

FIG.2 is a block diagram 200 of an electronic device 101 for supporting legacy network communication and 5G network communication according to certain embodiments. Referring to FIG.2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments, the first network may be a legacy network including 2G, 3G, 4G, or long term evolution (LTE) network. The second communication processor 214 may establish a communication channel corresponding to a designated band (e.g., approximately 6GHz to 60 GHz) among bands to be used for wireless communication with the second network 294, and may support 5G network communication via the established channel. According to certain embodiments, the second network 294 may be a 5G network defined in 3GPP. Additionally, according to an embodiment, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment, the first communication processor 212 and the second communication processor 214 may be implemented in a single chip or a single package. According to certain embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment, the third RFFE 236 may be implemented as a part of the third RFIC 226.

According to an embodiment, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment, the first RFIC 222 and the second RFIC 224 may be implemented as a single chip or at least a part of the single package. According to an embodiment, the first RFFE 232 and the second RFFE 234 may be implemented as a single chip or at least a part of the single package. According to an embodiment, at least one antenna module of the first antenna module 242 or the second antenna module 244 may be omitted, or may be combined with another antenna module so as to process RF signals in a plurality of bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

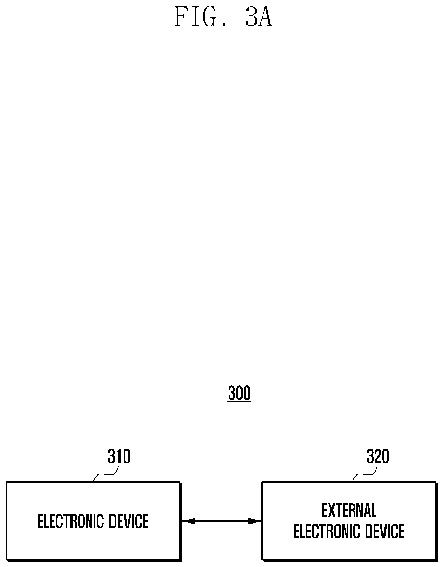

FIG. 3A is a view illustrating an embodiment in which the electronic device is connected through short-range wireless communication to an external electronic device, according to various embodiments of the present disclosure.

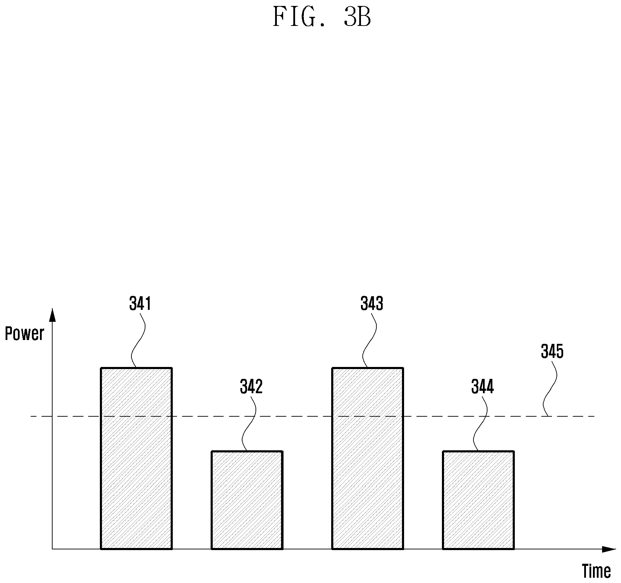

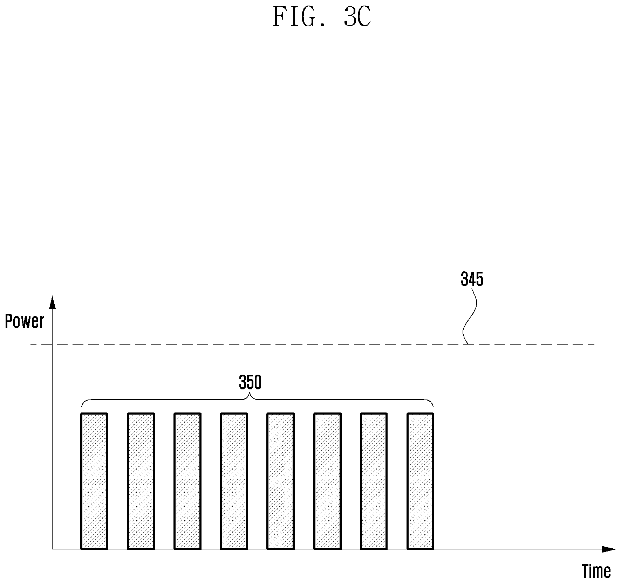

With reference to FIG. 3, a wireless LAN system 300 may include an electronic device 310 and/or an external device. The external device may be an external electronic device 320. According to an embodiment, the electronic device 310 may perform wireless communication with the external electronic device 320 through short-range wireless communication. The short-range wireless communication may mean a variety of communication methods that both the electronic device 310 and/or the external electronic device 320 may support. For example, the short-range wireless communication may be Wi-Fi. The external electronic device 320 may serve as a base station that provides wireless communication to at least one electronic device 310 located within the communication radius of the wireless LAN system 300. As an example, the external electronic device 320 may include an access point (AP) of IEEE 802.11. The electronic device 310 may include a station (STA) of IEEE 802.11.

The short-range wireless communication that the electronic device 310 and/or the external electronic device 320 use to exchange data may use various frequency bands, including a first frequency band (e.g., 2.4 GHz), a second frequency band (e.g., 5 GHz), a third frequency band (e.g., 6 GHz), and/or a fourth frequency band (e.g., 7 GHz). The electronic device 310 and/or the external electronic device 320 may establish a channel included in a frequency band of one of the plurality of frequency bands, and exchange data using the established channel.

The electronic device 310 may transmit a signal that includes a plurality of packets to the external electronic device 320 through the established channel. The electronic device 310 may determine a strength of the signal to be transmitted to the external electronic device 320 based on a state of the channel (e.g. a quality of communication) established between the external electronic device 320 and the electronic device 310 device.

According to an example, the electronic device 310 may transmit a signal with a relatively low strength to the external electronic device 320 as the state of the channel is relatively good. In case that the state of the channel is good, a success rate of data transmission may be high even if the signal is transmitted with relatively low strength.

According to an example, the electronic device 310 may transmit a signal with a relatively high strength to the external electronic device 320 as the state of the channel is relatively poor. In case that the state of the channel is poor, a success rate of data transmission may be high only when the signal is transmitted with relatively high strength.

However, the strength of the signal to be transmitted to the external electronic device 320 may be limited by various conditions. According to an example, in case that an external object (e.g., a part of a user's body) is in contact and/or in proximity to the electronic device 310, the electronic device 310 may determine the strength of the signal to be a specified magnitude or less to satisfy a specific absorption rate (SAR) condition. According to an example, the electronic device 310 may determine a strength of a signal in consideration of a maximum average power and/or a peak power of a signal that are defined by the federal communication commission (FCC), which is the regulatory agency for communication frequencies in the United States. For example, the electronic device 310 may determine the strength of the signal such that the signal has an average power that is equal to or less than a maximum average power value of a signal defined by the FCC and/or a peak power that is equal to or less than a maximum peak power value of a signal defined by the FCC.

A strength determined to have a peak power that is equal to or less than the maximum peak power value of the signal defined by the FCC may be a strength that is insufficient for the electronic device 310 to perform seamless communication services. According to an example, as a distance between the electronic device 310 and the external electronic device 320 increases, a strength of a signal required to perform a proper service may increase. In case that the required strength of the signal is greater than a strength determined to have an average power that is equal to or less than the maximum average power value of the signal defined by the FCC, the quality of the service performed by the electronic device 310 may be degraded. It will be understood that the FCC is just one example of an entity that may define signal power limits, and that the SAR condition(s) may be based on limits set by any suitable entity.

The electronic device 310 may support a time average SAR (TAS) mode to solve the problems described above. The TAS mode may refer to a mode in which a strength of signal may be configured so that an average power of a radiated signal over a specified period of time is equal to or less than (or less than) a specified magnitude. The electronic device 310 may adjust the peak power of the signal, in the TAS mode, in a state in which the average power of the signal is equal to or less than (or less than) a specified magnitude is satisfied.

FIG. 3B is a view illustrating an embodiment in which the electronic device, according to an embodiment, adjusts a strength of a signal to satisfy a specific absorption rate (SAR).

The electronic device (e.g., the electronic device 310 in FIG. 3A) may determine (or configure) the strength of the signal such that, in the TAS mode, the average power of the signal is equal to or less than (or less than) a specified magnitude.

The electronic device 310 may transmit a signal with a peak power equal to or greater than a specified magnitude, when a condition is met that the average power of the signal is equal to or less than (or less than) the specified magnitude.

With reference to FIG. 3B, the electronic device 310 may configure a peak power of some of a signal corresponding to some packets (for example a first set of packets) 341 and 343 of the plurality of packets 341, 342, 343, and 344 to be at or above a specified magnitude 345. Through the method described above, in case that the required strength of the signal is greater than a strength determined to have an average power that is equal to or less than the maximum average power value of the signal defined by the FCC (or some other entity), the problem of lowering the quality of the service performed by the electronic device 310 may be solved to some extent. However, in case that an amount of data transmitted by the electronic device 310 to the external electronic device (e.g., the external electronic device 320 in FIG. 3A) increases, a signal having a peak power lower than a magnitude of the peak power required for the smooth performance of the service may be transmitted to the external electronic device 320, and the quality of the service may be degraded.

FIG. 3C is a view illustrating an embodiment in which the electronic device, according to an embodiment, adjusts a strength of a signal to satisfy a specific absorption rate (SAR).

The electronic device 310 may determine (or configure) the strength of the signal such that, in the TAS mode, the average power of the signal is equal to or less than (or less than) a specified magnitude.

The electronic device 310 may transmit a signal with a peak power equal to or greater than a specified magnitude, when a condition is met that the average power of the signal is equal to or less than (or less than) the specified magnitude.

With reference to FIG. 3C, the electronic device 310 may transmit a signal that includes a plurality of packets 350 to the external electronic device 320. In case that data (or packets) that the electronic device 310 needs to transmit to the external electronic device 320 increases, the electronic device 310 may decrease the peak power of the signal so that the average power of the signal is equal to or less than (or less than) a specified magnitude. In case that the peak power of the signal decreases, the quality of the service performed by the electronic device 310 may decrease, as the external electronic device 320 may not receive the signal, or the number of packets retransmitted to the external electronic device 320 may increase.

Hereinafter, an embodiment is described in which the electronic device 310 configures a latency (i.e. interval) between a plurality of packets to reduce (or prevent) degradation of service by transmitting a signal with increased peak power.

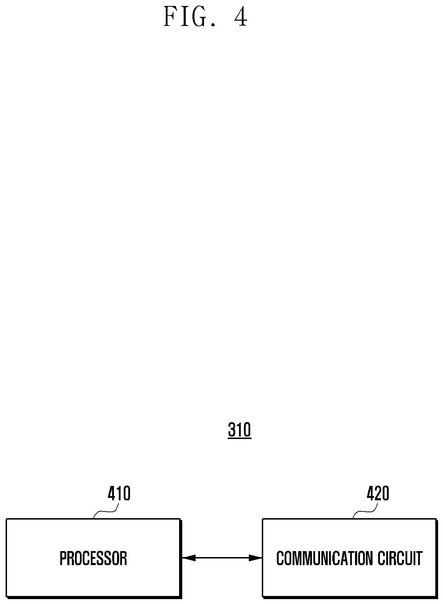

FIG. 4 is a block diagram illustrating the electronic device according to various embodiments of the present invention.

According to an embodiment, the electronic device (e.g., the electronic device 310 in FIG. 3A) may include a processor (e.g., the processor 120 in FIG. 1) 410 and/or a communication circuit (e.g., the wireless communication module 192 in FIG. 1) 420.

According to an embodiment, the electronic device 300 may perform wireless communication with the external device (e.g., the external electronic device 104 in FIG. 1) through short-range wireless communication or cellular wireless communication. The short-range wireless communication may mean a variety of communication methods that may be supported by both the electronic device 100 and/or the external device (e.g., the external electronic device 320 in FIG. 3A). For example, the wireless communication may be Wi-Fi. The cellular wireless communication is a variety of communication methods that may be supported by both the electronic device 310 and/or the external electronic device 320, and may be one of various cellular communications, including fourth generation cellular communication (long-term evolution), fifth generation cellular communication (new radio).

The external electronic device 320 may perform a role as a base station that provides wireless communication to the electronic devices 310 located within a communication radius of the external electronic device 320. As an example, the external electronic device 320 may perform a role of a station (STA) in IEEE 802.11, and the electronic device 310 may perform a role of an access point (AP) in IEEE 802.11.

The processor 410 may receive data transmitted by the external electronic device (e.g., the external electronic device 320 in FIG. 3) through the communication circuit 420 and perform various operations using the received data. Alternatively, the processor 410 may control the communication circuit 420 to transmit at least one or more packets including data to the external electronic device 320.

The communication circuit 420 may include various circuit structures used for modulation and/or demodulation of a signal within the electronic device 300. For example, the communication circuit 420 may modulate a signal in the baseband into a signal in the radio frequency (RF) band to be output through the antenna (not illustrated), or demodulate a signal in the RF band received through the antenna into a signal in the baseband to be transmitted to the processor 410.

The communication circuit 420 may transmit a signal including a plurality of packets to the external electronic device 320 over the at least one or more links established between the electronic device 310 and the external electronic device 320, and/or may receive a signal including a plurality of packets transmitted by the external electronic device 320 over the at least one or more links.

The communication circuit 420 may perform various operations to process the signal received from the processor 410. For example, the communication circuit 420 may perform a modulation operation on the signal received from the processor 410. For example, the communication circuit 320 may perform a frequency modulation operation to convert a signal in a baseband to a radio frequency (RF) signal (e.g., 2.4 GHz, 5 GHz, and/or 6 GHz) that is used for short-range wireless communication. The communication circuit 420 may also perform a demodulation operation on a signal received from the external electronic device 320 through the communication circuit 420. For example, the communication circuit 420 may perform a frequency demodulation operation that converts a radio frequency (RF) signal to a signal in the baseband.

The communication circuit 420 may include an amplifier to amplify a signal to be transmitted prior to modulating a frequency band of the signal to be transmitted to the external electronic device 320. The amplifier may amplify a signal to have a specific gain. The communication circuit 420 may control an average power and/or a peak power of a signal when operating in the time average SAR (TAS) mode or based on information indicating that the processor 410 is operating in the time average SAR (TAS) mode.

The communication circuit 420 may include a low noise amplifier (LNA) (not illustrated) that amplifies a received signal prior to demodulating a frequency band of a signal transmitted by the external electronic device 320 into a signal in the baseband. The low noise amplifier may amplify a signal to have a specific gain.

The communication circuit 420 may include constituent elements for separating a signal passing through the amplifier (or a signal to be transmitted to the external electronic device 104) from a signal output by the low noise amplifier (or a signal received from the external electronic device 104), such as a duplexer capable of separating signals based on frequency bands, and a switch for selecting an amplifier to be connected to an antenna (not illustrated).

The processor 410 may identify whether an external object (e.g., a part of the user's body) is in contact and/or in proximity to the electronic device 310, and may determine whether to activate the time average SAR (TAS) mode based on a result of the identification. The processor 410 may identify whether an external object is in contact and/or in proximity to the electronic device 310 using a proximity sensor (e.g., the sensor module 176 in FIG. 1) operatively connected to the processor 410. For example, an external object may be determined to be in contact and/or proximity to the electronic device 310 if a predetermined contact/proximity threshold is met. For example, an external object may be determined to be in contact and/or proximity to the electronic device 310 if the object is detected or determined to be within a specified distance (e.g. 1 cm) of the electronic device 310. It will be appreciated that this is merely an example, and that any suitable contact/proximity threshold could be used.

The processor 410 may activate the TAS mode based on identifying that an external object (e.g., a part of the user's body) is in contact and/or in proximity to the electronic device 310. The TAS mode may be a mode in which a strength of a signal is adjusted so that a magnitude of an average power of a signal radiated (or output) through the antenna over a specified period of time is equal to or less than (or less than) a specified magnitude. The processor 410 may ensure that intensity of electromagnetic waves exposed to the user of the electronic device 310 is equal to or less than a certain intensity in response to activation of the TAS mode. The certain intensity may be configured differently depending on the policies of the country in which the electronic device 310 is located (e.g., in the United States, policies specified by the FCC).

The processor 410 may control the communication circuit 420 such that the TAS mode is activated and the communication circuit 420 operates in the TAS mode. The communication circuit 420 may adjust a strength of a signal (or an amplitude) such that, as the TAS mode is activated, the magnitude of the average power of the signal radiated (or output) through the antenna is equal to or less than (or less than) a specified magnitude.

The processor 410 may identify (or monitor) a value (or a parameter) associated with a quality of communication with the external electronic device 320 (for example the quality of the signal transmitted by the external electronic device 320 while the communication circuit 420 is operating in the TAS mode.

In an example, the value associated with the quality of communication with the external electronic device 320 may be a value associated with the quality of a signal transmitted by the external electronic device 320, i.e. a value that indicates the quality of the signal transmitted (or broadcast) by the external electronic device 320, and may include, for example, a received signal strength indicator (RSSI) of the signal, a reference signal received power (RSRP) of the signal. The signals transmitted by the external electronic device 320 may include various signals transmitted by the external electronic device 320, for example, the signals transmitted by the external electronic device 320 may include a signal including user data transmitted by the external electronic device 320 to the electronic device 310, a signal indicating receipt of data transmitted by the electronic device 310 to the external electronic device 320, and/or a signal indicating a state of a channel between the external electronic device 320 and the electronic device 310. A situation in which the signal transmitted by the external electronic device 320 is of low quality may refer to a situation in which the channel created between the electronic device 310 and the external electronic device 320 is in poor state.

In an example, the value associated with the quality of communication with the external electronic device 320 may include a retransmission rate of data transmitted by the electronic device 310 to the external electronic device 320 or a retransmission rate of data transmitted by the external electronic device 320 to the electronic device 310. A situation with a high retransmission rate of data may refer to a situation in which the channel created between the electronic device 310 and the external electronic device 320 is in poor state.

The processor 410 may identify whether the quality of communication with the external electronic device 320 (for example the quality of the signal transmitted by the external electronic device 320) satisfies a specified condition. The specified condition may refer to a condition related to a state of a channel created between the electronic device 310 and the external electronic device 320. The specified condition may include a condition in which a value indicating the quality of the signal transmitted (or broadcast) by the external electronic device 320 is equal to or less than (or less than) a specified value, and/or a condition in which a retransmission rate of data transmitted by the electronic device 310 to the external electronic device 320 or a retransmission rate of data transmitted by the external electronic device 320 to the electronic device 310 is equal to or greater than (or greater than) a specified value. According to an example, the quality of the signal transmitted by the external electronic device 320 satisfying a specified condition may refer to a situation in which the channel created between the electronic device 310 and the external electronic device 320 is in poor state.

The processor 410 may decrease the average power of the signal over a specified period of time, based on the quality of the signal transmitted by the external electronic device 320 satisfying a specified condition.

A method of reducing an average power of a signal over a specified period of time may include a method of configuring (or increasing) a latency (or interval) between at least some packets (e.g. a first set of packets) of the plurality of packets to be transmitted to the external electronic device 320. The configuring (or increasing) of the latency may mean reducing the average power of the signal over a specified period of time. A strength of a signal during the latency (i.e. the interval between packets) may decrease, and thus the average power of the signal including the latency over a specified period of time may decrease. That is, the average power of the signal may be decreased by increasing the interval between at least some of the packets, thereby decreasing the number of packets transmitted in a certain time period. As the average power of the signal decreases, a peak power of some of the signal that includes a plurality of packets may increase. That is, by increasing the latency, the average power of the signal may be reduced, and consequently the peak power when transmitting packets can be increased without exceeding the original average power of the signal. The quality of a service using the plurality of packets may be improved as the peak power of some of the signal including the plurality of packets increases. The processor 410 may decrease the number of packets to be transmitted to the external electronic device 320 over a specified period of time (or unit of time) by configuring (or increasing) the latency between at least some packets. As the number of packets to be transmitted to the external electronic device 320 decreases over a specified period of time, and the amplitude of the signal decreases during the latency (i.e. during the interval between packets), the processor 410 may control the communication circuit 420 to increase the peak power of some of the signal including the plurality of packets, without increasing the average power of the signal.

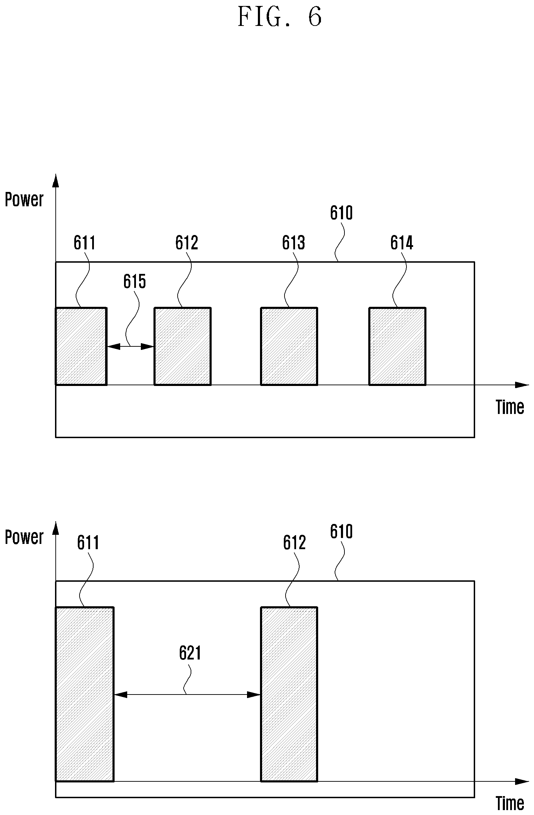

The processor 410 may configure the latency such that the average power of the signal with the increased peak power is equal to or less than (or less than) a specified value. A specific example of configuring the latency is described below in FIG. 6.

After configuring the latency, the processor 410 may control the communication circuit 420 to increase the strength of the signal (or the average power of the signal) that includes the plurality of packets with the configured latency (e.g. the first set of packets), and may control the communication circuit 420 to radiate the signal with the increased strength. The communication circuit 420 can increase the latency configuration and the peak power in a method that controls a voltage (or a current) applied to the amplifier included in the communication circuit 420. According to an example, the communication circuit 420 may decrease the average power of the signal in a method that decreases the voltage (or current) applied to the amplifier (or does not apply the voltage (or current)) during the latency, and increase the peak power of the signal in a method that increases the voltage (or current) applied to the amplifier during times other than the latency.

The processor 410 may satisfy the SAR condition through the methods described above while avoiding (or at least suppressing) a decrease in the quality of the service.

The processor 410 may again increase (or restore) the average power of the signal over a specified period of time, based on the quality of the signal transmitted by the external electronic device 320 not satisfying a specified condition.

The method of increasing (or restoring) the average power of the signal over a specified period of time may include a method of decreasing (or restoring) a latency between at least some (e.g. a third set of packets) of the plurality of packets to be transmitted to the external electronic device 320. The decreasing (or restoring) of the latency may mean increasing the average power of the signal over a specified period of time. As the average power of some of the signal including the plurality of packets increases, a transmission rate of the plurality of packets may be improved. The processor 410 may increase the number of packets to be transmitted to the external electronic device 320 over a specified period of time (or unit of time) by decreasing (or restoring) the latency between at least some packets.

The processor 410 may deactivate the TAS mode based on identifying that an external object (e.g., a part of the user's body) is released from being in contact and/or in proximity to the electronic device 310. The processor 410 may configure the strength of signal output by the electronic device 310 to be independent of the policies of the country in which the electronic device 310 is located (e.g., in the United States, policies specified by the FCC), in response to the deactivation of the TAS mode.

The processor 410 may monitor a value associated with the quality of communication with the external electronic device 320 (for example a quality of the signal transmitted by the external electronic device 320) at specified intervals, and may adjust the latency. For example, the processor 410 may further increase a latency between at least some packets (e.g. a second set of packets) among the plurality of packets based on identifying a decrease in quality of a signal received from the external device, and may control the communication circuit 420 to further increase a strength of a signal that includes the packets (e.g. the second set of packets) having the increased latency. For example, the processor 410 may further increase a latency between at least some packets (e.g. the second set of packets) among the plurality of packets based on identifying an increase in a retransmission rate of packets transmitted to the external device or received from the external device, and control the communication circuit 420 to further increase a strength of a signal that includes the packets (e.g. the second set of packets) having the increased latency.

According to an example, the processor 410 may increase the latency between at least some of the plurality of packets to be transmitted to the external electronic device 320 based on a retransmission rate of the packets to be transmitted to the external electronic device 320 satisfying a specified condition (e.g., the retransmission rate is above the specified value). The retransmission rate of the packets satisfying the specified condition may mean that the channel created between the external electronic device 320 and the electronic device 310 is in poor state. Therefore, the processor 410 may increase the peak power of the signal and a transmission success rate of the packets to be transmitted to the external electronic device 320 by increasing the latency between at least some of the plurality of packets.

According to an example, the processor 410 may increase the latency between at least some of the plurality of packets to be transmitted to the external electronic device 320 based on the quality of the signal transmitted by the external electronic device 320 satisfying a specified condition (e.g., the quality of the signal is equal to or less than the specified value). The quality of the signal transmitted by the external electronic device 320 satisfying the specified condition may mean that the channel created between the external electronic device 320 and the electronic device 310 is in poor state. Therefore, the processor 410 may increase the peak power of the signal and a transmission success rate of the packets to be transmitted to the external electronic device 320 by increasing the latency between at least some of the plurality of packets.

According to an example, the processor 410 may decrease the latency between at least some of the plurality of packets to be transmitted to the external electronic device 320 based on a retransmission rate of the packets to be transmitted to the external electronic device 320 not satisfying a specified condition (e.g., the retransmission rate is above the specified value). The retransmission rate of the packets not satisfying the specified condition may mean that the channel created between the external electronic device 320 and the electronic device 310 is in good state. Therefore, the processor 410 may increase the transmission rate of the packets to be transmitted to the external electronic device 320 by decreasing the latency between at least some of the plurality of packets.

According to an example, the processor 410 may decrease the latency between at least some of the plurality of packets to be transmitted to the external electronic device 320 based on the quality of the signal transmitted by the external electronic device 320 not satisfying a specified condition (e.g., the quality of the signal is equal to or less than the specified value). The quality of the signal transmitted by the external electronic device 320 not satisfying the specified condition may mean that the channel created between the external electronic device 320 and the electronic device 310 is in good state. Therefore, the processor 410 may increase the transmission rate of the packets to be transmitted to the external electronic device 320 by decreasing the latency between at least some of the plurality of packets.

The processor 410 may configure the latency differently based on a service type of some packets, in configuring the latency of some packets of the plurality of packets. The processor 410 may identify whether some packets (e.g. a fourth set of packets) having a specified service type are present among the plurality of packets. The specified service type may include a service type that requires relatively low latency. According to an example, the specified service type is a real time service type, which may include a voice call service, a video call service, a live broadcast service, or a service type configured by the user. The processor 410 may not configure the latency between some packets (e.g. the fourth set of packets) in case that some packets having the specified service type are present. That is, the latency of the packets having the specified service type may be maintained even if the value associated with quality of communication with the external electronic device 320 (for example the quality of a signal received from the external device 320) satisfies the specified condition while the communication circuit is operating in the TAS mode. In addition, the processor 410 may configure a latency between some other packets, in case that there are some other packets (e.g. the first set of packets) that do not have the specified service type. The processor 410 may control the communication circuit 420 to configure a latency between the other packets (e.g. the first set of packets) of the plurality of packets that do not have the specified service type and/or to increase a peak power of some of the signal including some packets that have the specified service type.

The processor 410 may configure a latency differently based on the priority configured for each of the service types. For example, the processor 410 may identify a priority of set of packets and may adjust (e.g. increase or decrease) a latency of (i.e. an interval between) the packets in the set based on the identified priority. The priority may be configured according to the characteristics of the service, and a service type that corresponds to a real-time service may have a higher priority than a service type that does not require relatively low latency. The processor 410 may configure lower latency for a higher priority and higher latency for a lower priority. The packets corresponding to a higher priority service may be transmitted relatively quickly to the external electronic device 320 due to low latency, while the packets corresponding to a lower priority service may be transmitted relatively slowly. Therefore, the processor 410 may satisfy the SAR condition and still provide a seamless service by transmitting a signal having an average power that is equal to or less than a specified value.

The method of decreasing the average power of the signal over a specified period of time may include a method of increasing the peak power of the signal including at least some packets of the plurality of packets to be transmitted to the external electronic device 320, and decreasing the peak power of the signal including some other packets. The processor 410 may control the communication circuit 420 to increase a peak power of a signal that includes some packets (e.g. a fourth set of packets) having a specified service type among the plurality of packets. The specified service type may include a service type that requires relatively low latency. According to an example, the specified service type is a real time service type, which may include a voice call service, a video call service, a live broadcast service, or a service type configured by the user. The processor 410 may control the communication circuit 420 to decrease a peak power of a signal that includes some other packets not having a specified service type among the plurality of packets. Through the method described above, the processor 410 may configure the peak power of some of the signal including the packets associated with the service requiring low latency to be high, so that the quality of the service can be improved, and the processor 410 may configure the peak power of some of the signal including the packets associated with the service that does not require relatively low latency to be low, so that the average power of the signal over a specified period of time is equal to less than (or less than) a specified value.

While the embodiment described above describes that the processor 410 controls the communication circuit 420, the present disclosure may be modified in various ways. According to an example, the communication circuit 420 may increase the latency between the plurality of packets, without control of the processor 410, in case that a value associated with the quality of communication with the external electronic device (for example the quality of the signal transmitted by the external electronic device 320) satisfies a specified condition. Alternatively, the communication circuit 420 may identify a service type included in a header of the packet transmitted by the processor 410 and perform an increase in latency based on the service type.

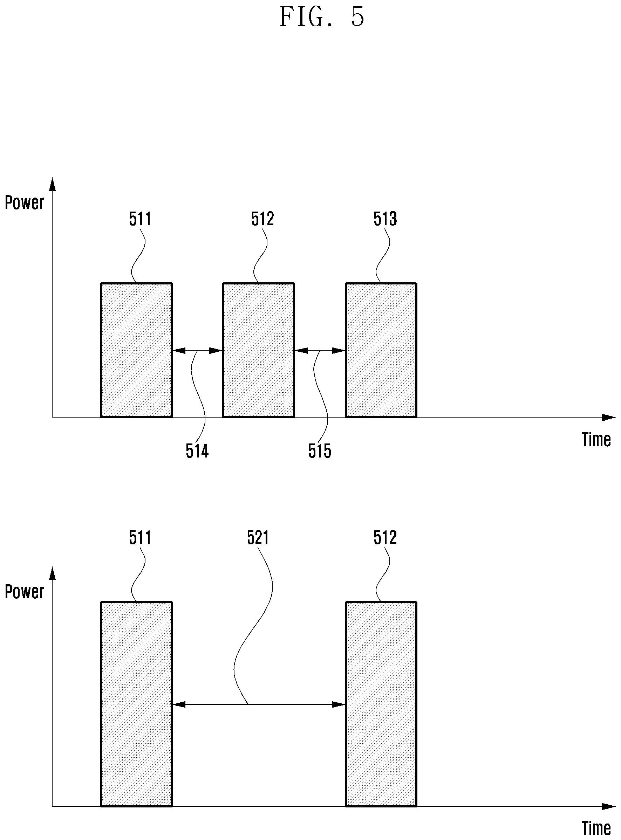

FIG. 5 is a view illustrating an embodiment in which the electronic device, according to an embodiment, increases a latency between a plurality of packets.

With reference to FIG. 5, packets 511, 512, and 513 are illustrated to be transmitted by the electronic device (e.g., the electronic device 310 in FIG. 4) to the external electronic device (e.g., the external electronic device 320 in FIG. 3A). The electronic device 310 may transmit the packet 511 to the external electronic device 320, and then transmit the packet 512 to the external electronic device 320 after a latency 514. The electronic device 310 may transmit the packet 512 to the external electronic device 320, and then transmit the packet 513 to the external electronic device 320 after a latency 515.

The electronic device 310 may identify (or monitor) a value (or a parameter) associated with the quality of communication with the external electronic device 320 (for example the quality of the signal transmitted by the external electronic device 320) while the communication circuit 420 is operating in the TAS mode.

The value associated with the quality of communication with the external electronic device 320 (for example the quality of the signal transmitted by the external electronic device 320) may be a value that indicates the quality of the signal transmitted (or broadcast) by the external electronic device 320), and may include, for example, a received signal strength indicator (RSSI) of the signal, a reference signal received power (RSRP) of the signal. The signals transmitted by the external electronic device 320 may include various signals transmitted by the external electronic device 320, for example, the signals transmitted by the external electronic device 320 may include a signal including user data transmitted by the external electronic device 320 to the electronic device 310, a signal indicating receipt of data transmitted by the electronic device 310 to the external electronic device 320, and/or a signal indicating a state of a channel between the external electronic device 320 and the electronic device 310. A situation in which the signal transmitted by the external electronic device 320 is of low quality may refer to a situation in which the channel created between the electronic device 310 and the external electronic device 320 is in poor state.

The value associated with the quality of communication with the external electronic device 320 may include a retransmission rate of data transmitted by the electronic device 310 to the external electronic device 320 or a retransmission rate of data transmitted by the external electronic device 320 to the electronic device 310. A situation with a high retransmission rate of data may refer to a situation in which the channel created between the electronic device 310 and the external electronic device 320 is in poor state.

The electronic device 310 may identify whether the quality of communication with the external electronic device 320 (for example the quality of the signal transmitted by the external electronic device 320) satisfies a specified condition. The specified condition may refer to a condition related to a state of a channel created between the electronic device 310 and the external electronic device 320. The specified condition may include a condition in which a value indicating the quality of the signal transmitted (or broadcast) by the external electronic device 320 is equal to or less than (or less than) a specified value, and/or a condition in which a retransmission rate of data transmitted by the electronic device 310 to the external electronic device 320 or a retransmission rate of data transmitted by the external electronic device 320 to the electronic device 310 is equal to or greater than (or greater than) a specified value. According to an example, the quality of communication with the external electronic device 320 (for example the quality of the signal transmitted by the external electronic device 320) satisfying a specified condition may refer to a situation in which the channel created between the electronic device 310 and the external electronic device 320 is in poor state.

The electronic device 310 may decrease the average power of the signal over a specified period of time, based on the quality of communication with the external electronic device 320 (for example the quality of the signal transmitted by the external electronic device 320) satisfying a specified condition.

A method of reducing an average power of a signal over a specified period of time may include a method of configuring (or increasing) the latency 514 between at least some packets (e.g. a first set of packets) 511 and 512 of the plurality of packets 511, 512, and 513 to be transmitted to the external electronic device 320. The configuring (or increasing) of the latency 514 may mean reducing the average power of the signal over a specified period of time. With reference to FIG. 5, it can be seen that the latency 514 between some packets 511 and 512 is increased to a latency 521. A strength of a signal during the latency (i.e. during the interval between packets) may decrease, and thus the average power of the signal including the latency over a specified period of time may decrease. As the average power of the signal decreases, a peak power of some of the signal that includes a plurality of packets may be increased. The quality of a service using the plurality of packets 511 and 512 may be improved as the peak power of some of the signal including the plurality of packets increases. The electronic device 310 may decrease the number of packets to be transmitted to the external electronic device 320 over a specified period of time (or unit of time) by configuring (or increasing) the latency 514 between at least some packets 511 and 512. As the number of packets (e.g., two packets) to be transmitted to the external electronic device 320 decreases over a specified period of time, and the amplitude of the signal decreases during the latency (i.e. during the interval between packets), the electronic device 310 may control the communication circuit 420 to increase the peak power of some of the signal including the plurality of packets, without increasing the average power of the signal.

FIG. 6 is a view illustrating an embodiment in which the electronic device, according to an embodiment, determines the latency between the plurality of packets, for example when operating in a TAS mode.

With reference to FIG. 6, packets 611, 612, 613, and 614 are illustrated to be transmitted by the electronic device (e.g., the electronic device 310 in FIG. 4) to the external electronic device (e.g., the external electronic device 320 in FIG. 3A). The electronic device 310 may transmit the packet 611 to the external electronic device 320, and then transmit the packet 612, 613, and 614 to the external electronic device 320 after a latency 615. The latency 615 may mean intervals between the packets 612, 613, and 614. The packets 612, 613, and 614 may have a first interval that is the same as the latency 615.

The electronic device 310 may identify (or monitor) a value (or a parameter) associated with the quality of communication with the external electronic device 320 (for example the quality of the signal transmitted by the external electronic device 320) while the communication circuit 420 is operating in the TAS mode.

The value associated with the quality of communication with the external electronic device 320 (for example the quality of the signal transmitted by the external electronic device 320) may be a value that indicates the quality of the signal transmitted (or broadcast) by the external electronic device 320, and may include, for example, a received signal strength indicator (RSSI) of the signal, a reference signal received power (RSRP) of the signal. The signals transmitted by the external electronic device 320 may include various signals transmitted by the external electronic device 320, for example, the signals transmitted by the external electronic device 320 may include a signal including user data transmitted by the external electronic device 320 to the electronic device 310, a signal indicating receipt of data transmitted by the electronic device 310 to the external electronic device 320, and/or a signal indicating a state of a channel between the external electronic device 320 and the electronic device 310. A situation in which the signal transmitted by the external electronic device 320 is of low quality may refer to a situation in which the channel created between the electronic device 310 and the external electronic device 320 is in poor state.

The value associated with the quality of communication with the external electronic device 320 may include a retransmission rate of data transmitted by the electronic device 310 to the external electronic device 320 or a retransmission rate of data transmitted by the external electronic device 320 to the electronic device 310. A situation with a high retransmission rate of data may refer to a situation in which the channel created between the electronic device 310 and the external electronic device 320 is in poor state.

The electronic device 310 may identify whether the quality of communication with the external electronic device 320 (for example the quality of the signal transmitted by the external electronic device 320) satisfies a specified condition. The specified condition may refer to a condition related to a state of a channel created between the electronic device 310 and the external electronic device 320. The specified condition may include a condition in which a value indicating the quality of the signal transmitted (or broadcast) by the external electronic device 320 is equal to or less than (or less than) a specified value, and/or a condition in which a retransmission rate of data transmitted by the electronic device 310 to the external electronic device 320 or a retransmission rate of data transmitted by the external electronic device 320 to the electronic device 310 is equal to or greater than (or greater than) a specified value. According to an example, the quality of communication with the external electronic device 320 (for example the quality of the signal transmitted by the external electronic device 320) satisfying a specified condition may refer to a situation in which the channel created between the electronic device 310 and the external electronic device 320 is in poor state.

The electronic device 310 may decrease the average power of the signal over a specified period of time, based on the quality of communication with the external electronic device 320 (for example the quality of the signal transmitted by the external electronic device 320) satisfying a specified condition.

A method of reducing an average power of a signal over a specified period of time may include a method of configuring (or increasing) the latency 615 between at least some packets 611 and 612 of the plurality of packets 611, 612, 613, and 614 to be transmitted to the external electronic device 320.

The electronic device 310 may determine the increased latency 621 based on an average power of the signal including the plurality of packets 611, 612, 613, and 614 before the latency 615 increases and/or a peak power of the signal of at least some packets 611 and 612 of the plurality of packets having the increased latency 621. The latency 621 may mean intervals between the packets 611 and 612. The packets 611 and 612 may have a second interval that is the same as the latency 621, and the second interval may be greater than the first interval.

According to an example, the electronic device 310 may identify the average power of the signal including the plurality of packets 611, 612, 613, and 614. In FIG. 6, for ease of description, it is assumed that a maximum peak power of the signal including the plurality of packets before the latency 615 increases is 5 W, the time for the plurality of packets to be transmitted is 1 second, and the latency 615 is 1 second. In the assumed situation described above, an average power of the signal may be 2.5W (e.g., 5W*lsec * 4/ 8sec= 2.5 W).

The electronic device 310 may increase the latency 621 while maintaining the magnitude of the average power of the signal. In FIG. 6, for ease of description, it is assumed that a maximum peak power of the signal including the plurality of packets with the increased latency 621 is 10 W, and that the time for each of the plurality of packets to be transmitted is 1 second. In the assumed situation described above, the electronic device 310 may determine the latency 621 to be 3 seconds (e.g., 2.5W= (10W*lsec*2)/(latency 621)*2+2sec).

The example illustrated in FIG. 6 is only one example, and the electronic device 310 may determine the magnitude of the increased latency 621 in a variety of methods. In determining the magnitude of the increased latency 621, the electronic device 310 may consider the magnitude of the average power of the signal, the magnitude of the increased peak power, and/or the transmission time of some of the signal including the packets.

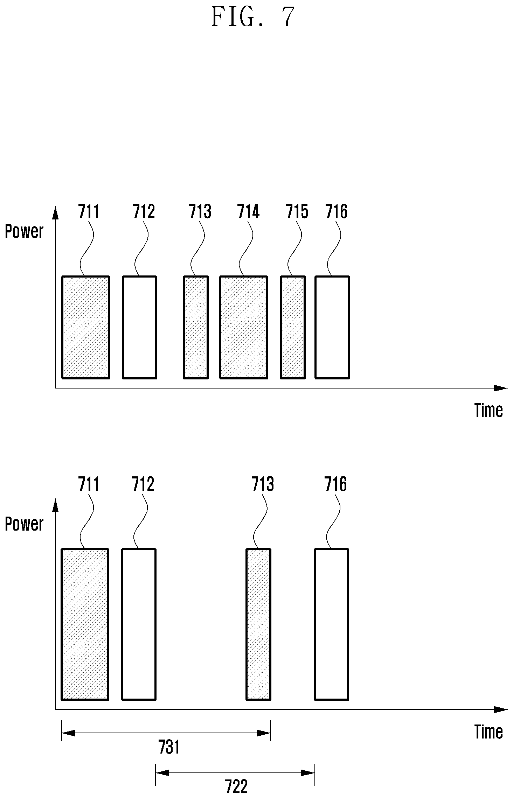

FIG. 7 is a view illustrating an embodiment in which the electronic device, according to an embodiment, determines whether the latency increases based on a service type of the plurality of packets.

With reference to FIG. 7, packets 711, 712, 713, 714, and 715 are illustrated to be transmitted by the electronic device (e.g., the electronic device 310 in FIG. 4) to the external electronic device (e.g., the external electronic device 320 in FIG. 3A).

The electronic device 310 may identify (or monitor) a value (or a parameter) associated with the quality of communication with the external electronic device 320 (for example the quality of the signal transmitted by the external electronic device 320) while the communication circuit 420 is operating in the TAS mode.

The value associated with the quality of communication with the external electronic device 320 (for example the quality of the signal transmitted by the external electronic device 320) maybe a value that indicates the quality of the signal transmitted (or broadcast) by the external electronic device 320, and may include, for example, a received signal strength indicator (RSSI) of the signal, a reference signal received power (RSRP) of the signal. The signals transmitted by the external electronic device 320 may include various signals transmitted by the external electronic device 320, for example, the signals transmitted by the external electronic device 320 may include a signal including user data transmitted by the external electronic device 320 to the electronic device 310, a signal indicating receipt of data transmitted by the electronic device 310 to the external electronic device 320, and/or a signal indicating a state of a channel between the external electronic device 320 and the electronic device 310. A situation in which the signal transmitted by the external electronic device 320 is of low quality may refer to a situation in which the channel created between the electronic device 310 and the external electronic device 320 is in poor state.

The value associated with the quality of communication with the external electronic device 320 may include a retransmission rate of data transmitted by the electronic device 310 to the external electronic device 320 or a retransmission rate of data transmitted by the external electronic device 320 to the electronic device 310. A situation with a high retransmission rate of data may refer to a situation in which the channel created between the electronic device 310 and the external electronic device 320 is in poor state.

The electronic device 310 may identify whether the quality of communication with the external electronic device 320 (for example the quality of the signal transmitted by the external electronic device 320) satisfies a specified condition. The specified condition may refer to a condition related to a state of a channel created between the electronic device 310 and the external electronic device 320. The specified condition may include a condition in which a value indicating the quality of the signal transmitted (or broadcast) by the external electronic device 320 is equal to or less than (or less than) a specified value, and/or a condition in which a retransmission rate of data transmitted by the electronic device 310 to the external electronic device 320 or a retransmission rate of data transmitted by the external electronic device 320 to the electronic device 310 is equal to or greater than (or greater than) a specified value. According to an example, the quality of communication with the external electronic device 320 (for example the quality of the signal transmitted by the external electronic device 320) satisfying a specified condition may refer to a situation in which the channel created between the electronic device 310 and the external electronic device 320 is in poor state.

The electronic device 310 may decrease the average power of the signal over a specified period of time, based on the quality of communication with the external electronic device 320 (for example the quality of the signal transmitted by the external electronic device 320) satisfying a specified condition.

A method of reducing an average power of a signal over a specified period of time may include a method of configuring (or increasing) the latency 721 between at least some packets 711 and 713 of the plurality of packets 711, 712, 713, 714, 715, and 716 to be transmitted to the external electronic device 320.

The electronic device 310 may configure the latency differently based on a service type of some packets, in configuring the latency of some packets of the plurality of packets 711, 712, 713, 714, 715, and 716. The electronic device 310 may identify whether some packets (e.g. a fourth set of packets) 712 and 716 having a specified service type are present among the plurality of packets 711, 712, 713, 714, 715, and 716. The specified service type may include a service type that requires relatively low latency. According to an example, the specified service type is a real time service type, which may include a voice call service, a video call service, a live broadcast service, or a service type configured by the user. The electronic device 310 may not increase the latency 722 between some packets 712 and 716 in case that there are some packets 712 and 716 having a specified service type. In addition, the electronic device 310 may increase the latency 731 between some other packets (e.g. the first set of packets) 711 and 713, in case that there are some other packets 711 and 713 that do not have the specified service type. The electronic device 310 may control the communication circuit 420 to configure the latency 731 between some other packets 711 and 713 of the plurality of packets 711, 712, 713, 714, 715, and 716 that do not have the specified service type and/or to increase a peak power of some of the signal including some packets 712 and 714 that have the specified service type. Therefore, the electronic device 310 may satisfy the SAR condition and still provide a seamless service by transmitting a signal having an average power that is equal to or less than a specified value.

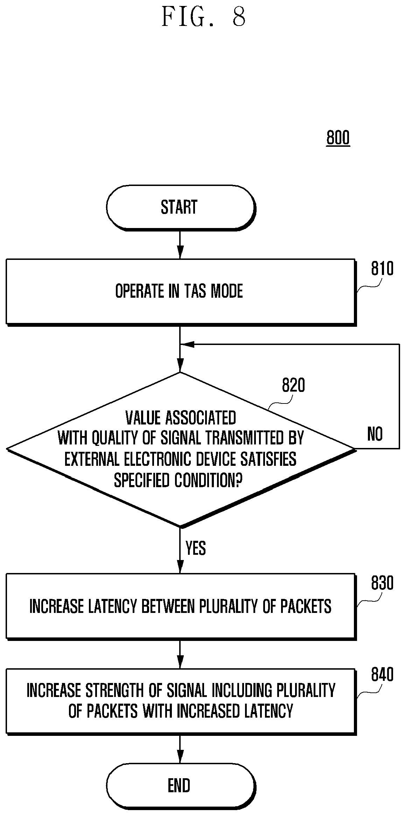

FIG. 8 is an operational flowchart illustrating a method of operating the electronic device according to an embodiment.

The electronic device (e.g., the electronic device 310 in FIG. 4) may, at operation 810, operate in the TAS mode.

The electronic device 310 may identify whether an external object (e.g., a part of the user's body) is in contact and/or in proximity to the electronic device 310, and may determine whether to activate the time average SAR (TAS) mode based on a result of the identification. The electronic device 310 may identify whether an external object is in contact and/or in proximity to the electronic device 310 using a proximity sensor (e.g., the sensor module 176 in FIG. 1) operatively connected to the electronic device 310.

The electronic device 310 may activate the TAS mode based on identifying that an external object (e.g., a part of the user's body) is in contact and/or in proximity to the electronic device 310. The TAS mode may be a mode in which a strength of a signal is adjusted so that a magnitude of an average power of a signal radiated (or output) through the antenna over a specified period of time is equal to or less than (or less than) a specified magnitude. The electronic device 310 may ensure that intensity of electromagnetic waves exposed to the user of the electronic device 310 is equal to or less than a certain intensity in response to activation of the TAS mode. The certain intensity may be configured differently depending on the policies of the country in which the electronic device 310 is located (e.g., in the United States, policies specified by the FCC).

The electronic device 310 may control the communication circuit 420 such that the TAS mode is activated and the communication circuit 420 operates in the TAS mode. The communication circuit 420 may adjust a strength of a signal (or an amplitude) such that, as the TAS mode is activated, the magnitude of the average power of the signal radiated (or output) through the antenna is equal to or less than (or less than) a specified magnitude.

The electronic device 310 may, at operation 820, identify whether a value associated with the quality of communication with the external electronic device (for example the quality of the signal transmitted by the external electronic device (e.g., the external electronic device 320 in FIG. 3A)) satisfies a specified condition.

The electronic device 310 may identify (or monitor) a value (or a parameter) associated with the quality of communication with the external electronic device 320 (for example the quality of the signal transmitted by the external electronic device 320) while the communication circuit 420 is operating in the TAS mode.

The value associated with the quality of communication with the external electronic device 320 (for example the quality of the signal transmitted by the external electronic device 320) may be a value that indicates the quality of the signal transmitted (or broadcast) by the external electronic device 320, and may include, for example, a received signal strength indicator (RSSI) of the signal, a reference signal received power (RSRP) of the signal. The signals transmitted by the external electronic device 320 may include various signals transmitted by the external electronic device 320, for example, the signals transmitted by the external electronic device 320 may include a signal including user data transmitted by the external electronic device 320 to the electronic device 310, a signal indicating receipt of data transmitted by the electronic device 310 to the external electronic device 320, and/or a signal indicating a state of a channel between the external electronic device 320 and the electronic device 310. A situation in which the signal transmitted by the external electronic device 320 is of low quality may refer to a situation in which the channel created between the electronic device 310 and the external electronic device 320 is in poor state.

The value associated with the quality of communication with the external electronic device 320 (may include a retransmission rate of data transmitted by the electronic device 310 to the external electronic device 320 or a retransmission rate of data transmitted by the external electronic device 320 to the electronic device 310. A situation with a high retransmission rate of data may refer to a situation in which the channel created between the electronic device 310 and the external electronic device 320 is in poor state.

The electronic device 310 may identify whether the quality of communication with the external electronic device 320 (for example the quality of the signal transmitted by the external electronic device 320) satisfies a specified condition. The specified condition may refer to a condition related to a state of a channel created between the electronic device 310 and the external electronic device 320. The specified condition may include a condition in which a value indicating the quality of the signal transmitted (or broadcast) by the external electronic device 320 is equal to or less than (or less than) a specified value, and/or a condition in which a retransmission rate of data transmitted by the electronic device 310 to the external electronic device 320 or a retransmission rate of data transmitted by the external electronic device 320 to the electronic device 310 is equal to or greater than (or greater than) a specified value. According to an example, the quality of communication with the external electronic device 320 (for example the quality of the signal transmitted by the external electronic device 320) satisfying a specified condition may refer to a situation in which the channel created between the electronic device 310 and the external electronic device 320 is in poor state.

The electronic device 310 may, at operation 830, increase the latency between the plurality of packets (e.g. a first set of packets) based on a value associated with the quality of communication with the external electronic device 320 (for example the quality of the signal transmitted by the external electronic device 320 satisfying a specified condition (operation 820-Y).

The electronic device 310 may decrease the average power of the signal over a specified period of time (for example by increasing the latency between packets), based on the quality of communication with the external electronic device 320 (for example the quality of the signal transmitted by the external electronic device 320) satisfying a specified condition.

A method of reducing an average power of a signal over a specified period of time may include a method of configuring (or increasing) a latency between at least some packets of the plurality of packets to be transmitted to the external electronic device 320. The configuring (or increasing) of the latency may mean reducing the average power of the signal over a specified period of time. A strength of a signal during the latency (i.e. the interval between packets) may decrease, and thus the average power of the signal including the latency over a specified period of time may decrease. As the average power of the signal decreases, a peak power of some of the signal that includes a plurality of packets may be increased. The quality of a service using the plurality of packets may be improved as the peak power of some of the signal including the plurality of packets increases. The electronic device 310 may decrease the number of packets to be transmitted to the external electronic device 320 over a specified period of time (or unit of time) by configuring (or increasing) the latency between at least some packets. As the number of packets to be transmitted to the external electronic device 320 decreases over a specified period of time, and the amplitude of the signal decreases during the latency (i.e. the interval between packets), the electronic device 310 may control the communication circuit 420 to increase the peak power of some of the signal including the plurality of packets, without increasing the average power of the signal.

The electronic device 310 may configure the latency such that the average power of the signal with the increased peak power is equal to or less than (or less than) a specified value.

The electronic device 310 may satisfy the SAR condition through the methods described above while avoiding (or at least suppressing) a decrease in the quality of the service.

The electronic device 310 may monitor a value associated with the quality of communication with the external electronic device 320 (for example the quality of the signal transmitted by the external electronic device 320) at specified intervals, and may adjust the latency based on the monitored value.

According to an example, the electronic device 310 may increase the latency between at least some of the plurality of packets to be transmitted to the external electronic device 320 based on a retransmission rate of the packets to be transmitted to the external electronic device 320 satisfying a specified condition (e.g., the retransmission rate is above the specified value). The retransmission rate of the packets satisfying the specified condition may mean that the channel created between the external electronic device 320 and the electronic device 310 is in poor state. Therefore, the electronic device 310 may increase the peak power of the signal and a transmission success rate of the packets to be transmitted to the external electronic device 320 by increasing the latency between at least some of the plurality of packets.

According to an example, the electronic device 310 may increase the latency between at least some of the plurality of packets to be transmitted to the external electronic device 320 based on the quality of the signal transmitted by the external electronic device 320 satisfying a specified condition (e.g., the quality of the signal is equal to or less than the specified value). The quality of the signal transmitted by the external electronic device 320 satisfying the specified condition may mean that the channel created between the external electronic device 320 and the electronic device 310 is in poor state. Therefore, the electronic device 310 may increase the peak power of the signal and a transmission success rate of the packets to be transmitted to the external electronic device 320 by increasing the latency between at least some of the plurality of packets.

According to an example, the electronic device 310 may decrease the latency between at least some of the plurality of packets to be transmitted to the external electronic device 320 based on a retransmission rate of the packets to be transmitted to the external electronic device 320 not satisfying a specified condition (e.g., the retransmission rate is above the specified value). The retransmission rate of the packets not satisfying the specified condition may mean that the channel created between the external electronic device 320 and the electronic device 310 is in good state. Therefore, the electronic device 310 may increase the transmission rate of the packets to be transmitted to the external electronic device 320 by decreasing the latency between at least some of the plurality of packets.

According to an example, the electronic device 310 may decrease the latency between at least some of the plurality of packets to be transmitted to the external electronic device 320 based on the quality of the signal transmitted by the external electronic device 320 not satisfying a specified condition (e.g., the quality of the signal is equal to or less than the specified value). The quality of the signal transmitted by the external electronic device 320 not satisfying the specified condition may mean that the channel created between the external electronic device 320 and the electronic device 310 is in good state. Therefore, the electronic device 310 may increase the transmission rate of the packets to be transmitted to the external electronic device 320 by decreasing the latency between at least some of the plurality of packets.

The electronic device 310 may configure the latency differently based on a service type of some packets, in configuring the latency of some packets of the plurality of packets. The electronic device 310 may identify whether some packets having a specified service type are present among the plurality of packets. The specified service type may include a service type that requires relatively low latency. According to an example, the specified service type is a real time service type, which may include a voice call service, a video call service, a live broadcast service, or a service type configured by the user. The electronic device 310 may not configure the latency between some packets in case that some packets having the specified service type are present. In addition, the electronic device 310 may configure a latency between some other packets, in case that there are some other packets that do not have the specified service type. The electronic device 310 may control the communication circuit 420 to configure a latency between some other packets of the plurality of packets that do not have the specified service type and/or to increase a peak power of some of the signal including some packets that have the specified service type.

The electronic device 310 may configure a latency differently based on the priority configured for each of the service types. The priority may be configured according to the characteristics of the service, and a service type that corresponds to a real-time service may have a higher priority than a service type that does not require relatively low latency. The electronic device 310 may configure lower latency for a higher priority and higher latency for a lower priority. The packets corresponding to a higher priority service may be transmitted relatively quickly to the external electronic device 320 due to low latency, while the packets corresponding to a lower priority service may be transmitted relatively slowly. Therefore, the electronic device 310 may satisfy the SAR condition and still provide a seamless service by transmitting a signal having an average power at or below a specified value.

The method of decreasing the average power of the signal over a specified period of time may include a method of increasing the peak power of the signal including at least some packets of the plurality of packets to be transmitted to the external electronic device 320, and decreasing the peak power of the signal including some other packets. The electronic device 310 may control the communication circuit 420 to increase a peak power of a signal that includes some packets having a specified service type among the plurality of packets. The specified service type may include a service type that requires relatively low latency. According to an example, the specified service type is a real time service type, which may include a voice call service, a video call service, a live broadcast service, or a service type configured by the user. The electronic device 310 may control the communication circuit 420 to decrease a peak power of a signal that includes some other packets not having a specified service type among the plurality of packets. Through the method described above, the electronic device 310 may configure the peak power of some of the signal including the packets associated with the service requiring low latency to be high, so that the quality of the service can be improved, and the electronic device 310 may configure the peak power of some of the signal including the packets associated with the service that does not require relatively low latency to be low, so that the average power of the signal over a specified period of time is equal to less than (or less than) a specified value.

The electronic device 310 may, at operation 840, increase the strength of the signal that includes the plurality of packets (e.g. the first set of packets) with the increased latency.

After configuring the latency, the electronic device 310 may control the communication circuit 420 to increase the strength of the signal (or the average power of the signal) that includes the plurality of packets with the latency, and may control the communication circuit 420 to radiate the signal with the increased strength. The communication circuit 420 can increase the latency configuration and the peak power in a method that controls a voltage (or a current) applied to the amplifier included in the communication circuit 420. According to an example, the communication circuit 420 may decrease the average power of the signal in a method that decreases the voltage (or current) applied to the amplifier (or does not apply the voltage (or current)) during the latency, and increase the peak power of the signal in a method that increases the voltage (or current) applied to the amplifier during times other than the latency.

An electronic device according to an embodiment may include a communication circuit configured to transmit and/or receive a plurality of packets to an external electronic device. The electronic device may include a processor. The processor may determine whether to operate a time average specific absorption rate (TAS) mode of the communication circuit when the processor detects that an external object is in contact or in proximity to the electronic device. The processor may increase a latency between at least some packets of the plurality of packets based on a value associated with quality of a signal transmitted by the external electronic device satisfying a specified condition while the communication circuit is operating in the TAS mode. The processor may be configured to control the communication circuit to increase a strength of a signal that includes the plurality of packets having the increased latency.

In the electronic device according to an embodiment, the processor may identify whether a retransmission rate of the packets transmitted to the external electronic device satisfies a specified condition. The processor may be configured to increase a latency between at least some packets of the plurality of packets, based on the retransmission rate of the packets to the external electronic device satisfying a specified condition.

In the electronic device according to an embodiment, the processor may further increase a latency between at least some packets of the plurality of packets based on identifying a decrease in the quality of the signal transmitted by the external electronic device. The processor may be configured to control the communication circuit to further increase a strength of a signal that includes the plurality of packets having the increased latency.

In the electronic device according to an embodiment, the processor may further increase a latency between at least some packets of the plurality of packets based on identifying an increase in the retransmission rate of the packets transmitted to the external electronic device. The processor may be configured to control the communication circuit to further increase a strength of a signal that includes the plurality of packets having the increased latency.

In the electronic device according to an embodiment, the processor may be configured to decrease a latency between at least some packets of the plurality of packets based on the quality of the signal transmitted by the external electronic device not satisfying a specified condition.

In the electronic device according to an embodiment, the processor may be configured to decrease a latency between at least some packets of the plurality of packets based on identifying an decrease in the retransmission rate of the packets transmitted to the external electronic device.

In the electronic device according to an embodiment, the processor may be configured to maintain a latency between at least some other packets whose service type is a specified service type.

In the electronic device according to an embodiment, the specified service type may be a service type that requires relatively low latency.

In the electronic device according to an embodiment, the processor may increase a strength of a signal that corresponds to at least some other packets whose service type is the specified service type. The processor may be configured to decrease a strength of a signal that corresponds to some packets whose service type is not the specified service type.

In the electronic device according to an embodiment, the processor may be configured to determine a strength of a signal including a plurality of packets having the increased latency such that an average power over a specified period of time of the signal satisfies a specified condition.

A method of operating the electronic device according to an embodiment may include determining whether to operate a time average specific absorption rate (TAS) mode of the communication circuit when the processor detects that an external object is in contact or in proximity to the electronic device. The method of operating the electronic device may include increasing a latency between at least some packets of the plurality of packets based on a value associated with quality of a signal transmitted by the external electronic device satisfying a specified condition while the communication circuit is operating in the TAS mode. The method of operating the electronic device may include increasing the strength of the signal to include the plurality of packets with the increased latency.

The method of operating the electronic device according to an embodiment may further include identifying whether a retransmission rate of the packets transmitted to the external electronic device satisfies a specified condition. The method of operating the electronic device may further include increasing a latency between at least some packets of the plurality of packets, based on the retransmission rate of the packets to the external electronic device satisfying a specified condition.

The method of operating the electronic device according to an embodiment may further include further increasing a latency between at least some packets of the plurality of packets based on identifying a decrease in the quality of the signal transmitted by the external electronic device. The method of operating the electronic device may further include further increasing the strength of the signal to include the plurality of packets with the increased latency.

The method of operating the electronic device according to an embodiment may further include further increasing a latency between at least some packets of the plurality of packets based on identifying an increase in the retransmission rate of the packets transmitted to the external electronic device. The method of operating the electronic device may further include further increasing the strength of the signal to include the plurality of packets with the increased latency.

The method of operating the electronic device according to an embodiment may further include decreasing a latency between at least some packets of the plurality of packets based on the quality of the signal transmitted by the external electronic device not satisfying a specified condition.

The method of operating the electronic device according to an embodiment may further include decreasing a latency between at least some packets of the plurality of packets based on identifying an decrease in the retransmission rate of the packets transmitted to the external electronic device.

The method of operating the electronic device according to an embodiment may further include maintaining a latency between at least some other packets whose service type is a specified service type.

In the method of operating the electronic device according to an embodiment, the specified service type may be a service type that requires relatively low latency.

The method of operating the electronic device according to an embodiment, may further include: increasing a strength of a signal corresponding to at least some other packets whose service type is the specified service type; or decreasing a strength of a signal corresponding to at least some other packets whose service type is not the specified service type.

In the method of operating the electronic device according to an embodiment, the increasing of the strength of the signal may include determining a strength of a signal including a plurality of packets having the increased latency such that an average power over a specified period of time of the signal satisfies a specified condition.

An electronic device according to an embodiment may include a communication circuit configured to transmit and/or receive a plurality of packets to an external electronic device. The electronic device may include a processor. The processor may determine whether to operate a time average specific absorption rate (TAS) mode of the communication circuit when the processor detects that an external object is in contact or in proximity to the electronic device. The processor may control the communication circuit such that at least some packets of the plurality of packets have a first interval while the communication circuit is operating in the TAS mode. The processor may control the communication circuit to transmit a signal including the at least some packets. The processor may control the communication circuit such that other some packets of the plurality of packets have a second interval greater than the first interval, based on a value associated with quality of a signal transmitted by the external electronic device satisfying a specified condition. The processor may control the communication circuit to increase a strength of a signal that includes the other some packets.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit configured to transmit a plurality of packets to an external device; and
a processor configured to:
determine whether to operate the communication circuit in a time average specific absorption rate (TAS) mode upon detecting that an external object is in contact with or in proximity to the electronic device,
increase a latency between a first set of packets among the plurality of packets based on a value associated with a quality of communication with the external device satisfying a first specified condition while the communication circuit is operating in the TAS mode, and
control the communication circuit to increase a strength of a signal that includes the first set of packets having the increased latency.

2. The electronic device of claim 1, wherein the value is at least one of:
a value associated with a quality of a signal received from the external device;
a retransmission rate of packets to the external device; and
a retransmission rate of packets from the external device.

3. The electronic device of claim 1, wherein the processor is configured to further increase a latency between a second set of packets among the plurality of packets based on identifying a decrease in quality of a signal received from the external device, and to control the communication circuit to further increase a strength of a signal that includes the second set of packets having the increased latency.

4. The electronic device of claim 1, wherein the processor is configured to further increase a latency between a second set of packets among the plurality of packets based on identifying an increase in a retransmission rate of packets transmitted to the external device or received from the external device, and to control the communication circuit to further increase a strength of a signal that includes the second set of packets having the increased latency.

5. The electronic device of claim 1, wherein the processor is further configured to decrease a latency between a third set of packets based on the value associated with the communication quality not satisfying a second specified condition.

6. The electronic device of claim 5, wherein the value associated with the communication quality is a retransmission rate of packets transmitted to the external device or received from the external device, wherein the second specified condition is an decrease in the retransmission rate, and wherein the processor is configured to decrease a latency between the third set of packets among the plurality of packets based on identifying a decrease in the retransmission rate of packets transmitted to the external device or received from the external device.

7. The electronic device of claim 1, wherein the processor is configured to maintain a latency between a fourth set of packets among the plurality of packets based on the value associated with a quality of communication with the external device satisfying the first specified condition while the communication circuit is operating in the TAS mode,
wherein the fourth set of packets comprises packets whose service type is a specified service type.

8. The electronic device of claim 7, wherein the specified service type is a service type that requires relatively low latency.

9. The electronic device of claim 1, wherein the processor is configured to at least one of:
increase a strength of a signal corresponding to a fourth set of packets whose service type is a specified service type among the plurality of packets; and
decrease a strength of a signal corresponding to a fifth set of packets whose service type is not the specified service type among the plurality of packets.

10. The electronic device of claim 1, wherein the processor is configured to control the strength of the signal including the first set of packets having the increased latency such that an average power over a specified period of time of the signal satisfies a third specified condition.

11. A method performed by an electronic device, the method comprising:
determining whether to operate a communication circuit in a time average specific absorption rate (TAS) mode when a processor detects that an external object is in contact or in proximity to the electronic device;
based on a value associated with a quality of communication with an external device satisfying a first specified condition while the communication circuit is operating in the TAS mode, increasing a latency between a first set of packets among a plurality of packets to be transmitted to the external device; and
increasing a strength of a signal including the first set of packets with the increased latency.

12. The method of claim 11, wherein the value is at least one of:
a value associated with a quality of a signal received from the external device;
a retransmission rate of packets to the external device; and
a retransmission rate of packets from the external device.

13. The method of claim 11, further comprising:
further increasing a latency between a second set of packets among the plurality of packets based on identifying a decrease in quality of a signal received from the external device; and
further increasing a strength of a signal that includes the second set of packets having the increased latency.

14. The method of claim 11, further comprising:
further increasing a latency between a second set of packets among the plurality of packets based on identifying an increase in a retransmission rate of packets transmitted to the external device or received from the external device; and
further increasing a strength of a signal that includes the second set of packets having the increased latency.

15. The method of claim 11, further comprising:
decreasing a latency between a third set of packets among the plurality of packets based on the value associated with the communication quality not satisfying a second specified condition.
